# EUROPEAN PATENT SPECIFICATION

(11) **EP 3 106 324 B1**
(45) Date of publication and mention of the grant of the patent: **26.06.2019**
(21) Application number: 14882453.5
(22) Date of filing: 12.12.2014
(51) Int. Cl.: B60C 17/00, B60C 3/04, B60C 11/03, B60C 15/00, B60C 9/28

(54) **RUN-FLAT RADIAL TIRE**
PANNENLAUFFÄHIGER RADIALREIFEN
PNEU À CARCASSE RADIALE À AFFAISSEMENT LIMITÉ

(30) Priority: 14.02.2014 JP 2014026752
(43) Date of publication of application: 21.12.2016
(73) Proprietor: Bridgestone Corporation, Tokyo 104-8340 (JP)
(72) Inventor: SAKURAI, Kenichi, Tokyo 104-8340 (JP)
(74) Representative: Oxley, Robin John George
(86) International application number: PCT/JP2014/083048
(87) International publication number: WO 2015/122092

(56) References cited:
- EP-A1- 1 155 878
- EP-A1- 2 072 280
- EP-A1- 3 064 381
- JP-A- 2003 312 218
- JP-A- 2004 017 668
- JP-A- 2005 119 384

## Description

### Technical Field

The present invention relates to a run-flat radial tire.

### Background Art

As a run-flat radial tire capable of safely running a specific distance even in a state in which the internal pressure has dropped due to a puncture or the like, a side reinforcement type of run-flat radial tire is known in which tire side portions are reinforced with side reinforcing rubber (see, for example, Japanese Patent Application Laid-Open (JP-A) No. 2012-116212).
Reference is also made to EP 3064381, which was not published at the priority date of the present case and which discloses a run-flat radial tire according to the preamble of Claim 1, and also to EP 2072280 and WO 2005/113260 A1.

### SUMMARY OF INVENTION

### Technical Problem

However, in cases in which a slip angle (SA) has been applied to a side reinforcement type of run-flat radial tire such as by a vehicle turning during running in a state of reduced internal pressure (during run-flat running), a buckling phenomenon sometimes occurs in which a tire side portion bends by folding in toward the tire inside.

An object of the present invention is to provide a run-flat radial tire capable of suppressing a buckling phenomenon from occurring in a tire side portion during run-flat running.

### Solution to Problem

A run-flat radial tire of a first aspect of the present invention is as claimed in claim 1. Note that the "tire cross-section height" referred to herein means a length of 1/2 the difference between the tire external diameter and a rim diameter in a non-loaded state, as defined in the 2014 edition of the Year Book of the Japan Automobile Tire Manufacturers Association (JATMA). In cases in which the inclined belt layer is configured by a single belt ply, the single belt ply is the maximum width belt ply.

### Advantageous Effects of Invention

The run-flat radial tire of the present invention enables a buckling phenomenon to be suppressed from occurring in a tire side portion during run-flat running.

### BRIEF DESCRIPTION OF DRAWINGS

Fig. 1 is a half cross-section illustrating one side of a cross-section of a run-flat radial tire according to the present invention, sectioned along a tire width direction.
Fig. 2 is a cross-section illustrating a state during run-flat running of a run-flat radial tire according to an exemplary embodiment of the present invention, sectioned along the tire width direction.
Fig. 3 is a side view of a run-flat radial tire of a comparative example during run-flat running, as viewed from the tire width direction.
Fig. 4 is a graph illustrating a relationship between a rim detachment index at a vehicle turn inside, and a rim detachment index at a vehicle turn outside.

### DESCRIPTION OF EMBODIMENTS

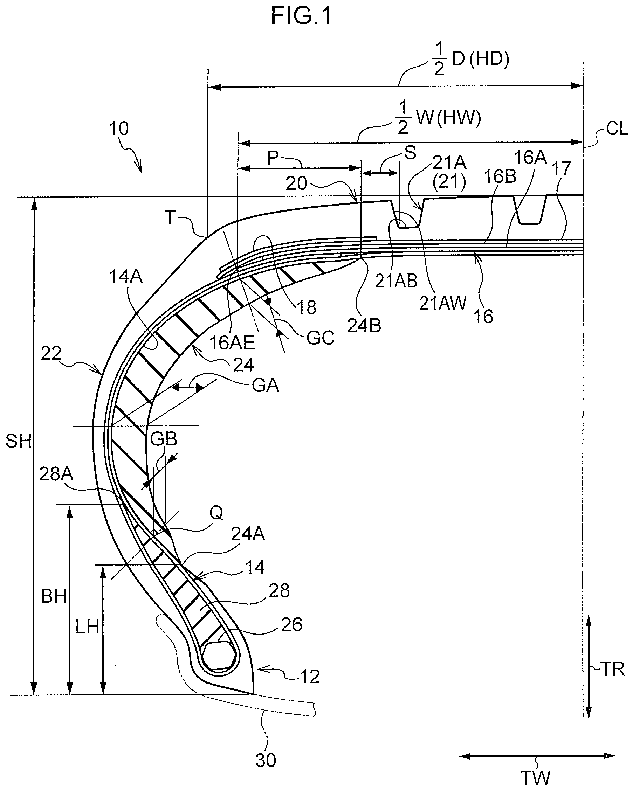

Explanation follows regarding a run-flat radial tire according to an exemplary embodiment of the present invention, with reference to the drawings. Fig. 1 is a cross-section illustrating one side of a run-flat radial tire 10 (hereinafter referred to as "tire 10") of the present exemplary embodiment, sectioned along a tire width direction. In the drawings, the arrow TW indicates the width direction of the tire 10 (tire width direction), and the arrow TR indicates a radial direction of the tire 10 (tire radial direction). The tire width direction referred to herein refers to a direction parallel to the rotation axis of the tire 10, and is also referred to as a tire axial direction. The tire radial direction is a direction orthogonal to the rotation axis of the tire 10. The label CL indicates an equator of the tire 10 (a tire equator).

Moreover, in the present exemplary embodiment, the rotation axis side of the tire 10 along the tire radial direction is referred to as the "tire radial direction inner side", and the opposite side to the rotation axis of the tire 10 along the tire radial direction is referred to as the "tire radial direction outer side". The tire equator CL side along the tire width direction is referred to as the "tire width direction inner side", and the opposite side to the tire equator CL along the tire width direction is referred to as the "tire width direction outer side".

Fig. 1 illustrates the tire 10 mounted to a standard rim 30 (illustrated by double-dotted intermittent lines in Fig. 1) when inflated to a standard air pressure. The "standard rim" referred to herein is a rim specified in the 2014 edition of Year Book of the Japan Automobile Tire Manufacturers Association (JATMA). The above standard air pressure is the air pressure corresponding to the maximum load capacity in the 2014 edition of the Year Book of the Japan Automobile Tire Manufacturers Association (JATMA).

Note that in the following explanation, loading refers to the maximum load (maximum load capacity) for a single wheel of the appropriate size as listed in the following Standards. The internal pressure is the air pressure corresponding the maximum load (maximum load capacity) for a single wheel listed in the following Standards. Moreover, the rim is a standard rim (or "Approved Rim", "Recommended Rim") of the appropriate size as listed in the following Standards. The Standard is determined according to current Industrial Standards prevailing in the region of tire manufacture or use. For example, as stipulated in "The Year Book of the Tire and Rim Association Inc." in the United States of America, in the "Standards Manual of the European Tyre and Rim Technical Organisation" in Europe, and in the "JATMA Year Book" of the Japan Automobile Tire Manufacturers Association in Japan.

As illustrated in Fig. 1, the tire 10 includes a left and right pair of bead portions 12 (only the bead portion 12 at one side is illustrated in Fig. 1), a carcass 14 spanning in a toroidal shape between the pair of bead portions 12, an inclined belt layer 16, a belt reinforcement layer 17, and reinforcement cord layers 18 that are provided further toward the tire radial direction outer side than the carcass 14, a tread portion 20 configuring an outer circumferential portion of the tire 10 provided further toward the tire radial direction outer side than the inclined belt layer 16, tire side portions 22 that respectively couple the bead portions 12 and the tread portion 20 together, and side reinforcing rubber 24 serving as an example of a side reinforcing layer provided at each tire side portion 22.

The tire 10 of the present exemplary embodiment has a section height SH set at 115 mm or more. The section height SH (tire cross-section height) referred to herein is the length of 1/2 the difference between the tire outer diameter and the rim diameter in a state in which the tire 10 is fitted to the standard rim 30 with an internal pressure of the standard air pressure.

Bead cores 26 are respectively embedded in the pair of bead portions 12. The carcass 14 spans between the bead cores 26.

The carcass 14 is configured by a single or plural carcass plies. The carcass plies are formed by covering plural strands of cord (for example, organic fiber cord or metal cord) with a covering rubber. The carcass 14 formed in this manner configures a tire frame extending in a toroidal shape from one of the bead cores 26 to the other of the bead cores 26. One end portion and another end portion of the carcass 14 each fold back around the respective bead core 26, from the tire inside to the tire outside, so as to extend as far as the tread portion 20, described later. Note that, although the one end portion and the other end portion of the carcass 14 extend as far as the tread portion 20 in the present exemplary embodiment, the present invention is not limited to this configuration, and a configuration may be applied in which the one end portion and the other end portion of the carcass 14 extend as far as the tire side portions 22, namely, are disposed inside the respective tire side portions 22.

In the present exemplary embodiment, the one end portion and the other end portion of the carcass 14 each fold back around the respective bead core 26 and the carcass 14 is anchored to the bead cores 26; however, the present invention is not limited to this configuration. For example, a configuration may be applied in which plural bead core pieces are disposed in the bead portions 12, and the one end portion and the other end portion of the carcass 14 are tucked between the plural bead core pieces to anchor the carcass 14 to the bead cores 26.

Bead filler 28 extending from the respective bead core 26 toward the tire radial direction outer side is embedded in respective regions of the bead portions 12 surrounded by the carcass 14. An end portion 28A at the tire radial direction outer side of the bead filler 28 enters into the tire side portion 22, and the thickness of the bead filler 28 decreases toward the tire radial direction outer side.

A height BH of the bead filler 28 is set within a range of from 30% to 50% of the section height SH. The height BH of the bead filler 28 referred to herein is the height (length along the tire radial direction) from the respective end portion 28A at the tire radial direction outer side of the bead filler 28 to a leading end of the bead portion 12, in a state in which the tire 10 is fitted to the standard rim 30 at an internal pressure of the standard air pressure. In cases in which the height BH of the bead filler 28 is less than 30% of the section height SH, sufficient durability cannot be secured during run-flat running. In cases in which the height BH of the bead filler 28 is more than 50% of the section height SH, there is a deterioration in ride quality. Thus, the height BH of the bead filler 28 is preferably set within a range of from 30% to 50% of the section height SH.

In the present exemplary embodiment, the end portion 28A of the bead filler 28 is disposed further toward the tire radial direction inner side than a maximum width position of the tire 10. Note that the maximum width position of the tire 10 refers to a position with the widest width along the tire width direction of the tire 10.

The inclined belt layer 16 is laid up at the tire radial direction outer side of the carcass 14. The inclined belt layer 16 is configured by a single or plural belt plies. The belt plies are formed by covering plural strands of cord (for example, organic fiber cord or metal cord) in a coating rubber. The cords configuring the belt plies extend in directions that are inclined with respect to the tire circumferential direction. The inclined belt layer 16 of the present exemplary embodiment is configured by two belt plies 16A, 16B.

The belt ply 16A is disposed at the tire radial direction inner side of the belt ply 16B. The width of the belt ply 16A along the tire width direction is wider than the width of the belt ply 16B along the tire width direction. Note that the belt ply 16A of the present exemplary embodiment is an example of a maximum width belt ply of the present invention.

The belt reinforcement layer 17 is provided at the tire radial direction outer side of the inclined belt layer 16. The belt reinforcement layer 17 covers the entire inclined belt layer 16. A pair of the reinforcement cord layers 18 are provided at the tire radial direction outer side of the belt reinforcement layer 17 so as to respectively cover both end portions of the belt reinforcement layer 17.

The tread portion 20 is provided at the tire radial direction outer side of the inclined belt layer 16, the belt reinforcement layer 17, and the reinforcement cord layers 18. The tread portion 20 is a location that makes contact with the road surface when running, and plural circumferential direction grooves 21 are formed extending along the tire circumferential direction in a tread face of the tread portion 20. Width direction grooves, not illustrated in the drawings, are formed extending along the tire width direction in the tread portion 20. The shape and number of the circumferential direction grooves 21 and the width direction grooves may be set as appropriate according to the performance required of the tire 10, such as water dispelling performance and steering stability.

The tire side portions 22 are each provided between the respective bead portions 12 and the tread portion 20. The tire side portions 22 extend in the tire radial direction and couple the respective bead portions 12 and the tread portion 20 together, and are configured so as to be able to bear load acting on the tire 10 during run-flat running.

In each tire side portion 22, the side reinforcing rubber 24 that reinforces the tire side portion 22 is laid up at the tire width direction inner side of the carcass 14. The side reinforcing rubber 24 is reinforcement rubber to enable running for a specific distance in a state in which the weight of the vehicle and the occupants is supported when the internal pressure of the tire 10 has decreased, such as due to puncturing. As an example in the present exemplary embodiment, side reinforcing rubber having a main component of rubber is laid up; however, there is no limitation thereto, and the side reinforcing rubber may be formed of another material and may, for example, be formed with a thermoplastic resin or the like as a main component.

Note that, although in the present exemplary embodiment the side reinforcing rubber 24 is formed from a single type of rubber material, there is no limitation thereto, and the side reinforcing rubber 24 may be formed from plural types of rubber material. Moreover, as long as the side reinforcing rubber 24 has a rubber material as a main component, other materials may be included, such as filler, short fibers, or resin. Moreover, in order to raise the durability during run-flat running, a rubber material having a JIS hardness of from 70 to 85, as measured at 20°C using a durometer tester, may be included as the rubber material configuring the side reinforcing rubber 24. Moreover, a rubber material may be included that has a physical property of a loss coefficient tan δ of 0.10 or lower, as measured using a viscosity spectrometer (for example a spectrometer manufactured by Toyo Seiki Seisaku-sho, Ltd.) under conditions of frequency 20 Hz, initial strain 10%, dynamic strain ± 2%, and temperature 60°C.

The side reinforcing rubber 24 extends in the tire radial direction along an inner face 14A of the carcass 14 from a side of the bead portion 12 toward a side of the tread portion 20. The side reinforcing rubber 24 is shaped with a thickness that decreases on progression from a center portion toward the side of the bead portion 12 and toward the side of the tread portion 20 and is, for example, formed in a substantially crescent moon shape. The thickness of the side reinforcing rubber 24 referred to herein refers to a length along a normal line to the carcass 14, in a state in which the tire 10 has been fitted to the standard rim 30 and has an internal pressure of the standard air pressure.

An inner liner, not illustrated in the drawings, is laid up at an inner face of the side reinforcing rubber 24, so as to span from one of the bead portions 12 to the other of the bead portions 12. As an example in the present exemplary embodiment, an inner liner having a main component of a butyl rubber is laid up; however, there is no limitation thereto, and an inner liner having a main component of another rubber material or a resin may be laid up.

Moreover, in each side reinforcing rubber 24, a lower end portion 24A at the bead portion 12 side overlaps with the bead filler 28 present on the other side of the carcass 14, and an upper end portion 24B on the tread portion 20 side overlaps with the inclined belt layer 16 present on the other side of the carcass 14. Specifically, the upper end portion 24B of the side reinforcing rubber 24 overlaps the maximum width belt ply 16A on the other side of the carcass 14.

Note that an overlap width P of the respective side reinforcing rubber 24 and the belt ply 16A along the tire width direction is set to a length of 20% or more of the section height SH. In other words, when the side reinforcing rubber 24 is projected along the tire radial direction, the overlap width P where the side reinforcing rubber 24 and the belt ply 16A overlap each other is set to a length of 20% or more of the section height SH. According to the invention the overlap width P is set to a length within a range of from 22% to 27% of the section height SH.

In cross-section along the tire width direction, the upper end portion 24B of each side reinforcing rubber 24 is disposed further toward the tire width direction outer side than a groove bottom 21AB of a circumferential direction groove 21A that is furthest toward the tire width direction outer side out of the plural circumferential direction grooves 21. Specifically, the upper end portion 24B is disposed in a position separated from an intersection point between the groove bottom 21AB and a groove wall 21AW at the tire width direction outer side of the circumferential direction groove 21A by 3% or more of a tread half width HD, described later, along the tire width direction. Note that in Fig. 1, a separation along the tire width direction between the upper end portion 24B of the side reinforcing rubber 24 and the intersection point of the circumferential direction groove 21A is indicated by the label S. Moreover, "intersection point between the groove wall and the groove bottom" referred to herein refers, in cross-section along the tire width direction, to an intersection point between an extension line of the groove bottom (groove bottom face) and an extension line of the groove wall (groove wall face) of the circumferential direction groove in cases in which a corner portion of the circumferential direction groove is curved, and refers to an intersection point between the groove bottom (groove bottom face) and the groove wall (groove wall face) of the circumferential direction groove in cases in which a corner portion of the circumferential direction groove is angulated.

In the present exemplary embodiment, the corner portion of the circumferential direction groove 21A is curved. Thus, the upper end portion 24B of the side reinforcing rubber 24 is disposed in a position separated by the separation S from an intersection point between an extension line of the groove bottom 21AB and an extension line of the groove wall 21AW. Note that the present invention is not limited to this configuration, and the corner portion of the circumferential direction groove 21A may be angulated.

The separation S is preferably set within a range of from 3% to 13% of the tread half width HD. Note that "tread half width" referred to herein refers to half the width of a tread width D (D/2), described later.

In the present exemplary embodiment, the circumferential direction groove 21A is formed within a range of from 50% to 60% of the tread half width HD from the tire equator CL of the tread portion 20.

A thickness GB of the side reinforcing rubber 24 at a center point Q running along an extension direction of the carcass 14 between the end portion 28A of the bead filler 28 and the lower end portion 24A of the side reinforcing rubber 24 is set with a thickness of 50% or less of a maximum thickness GA of the side reinforcing rubber 24. Setting the thickness GB of the side reinforcing rubber 24 with a thickness of 50% or less of the maximum thickness GA in this manner enables cracks to be suppressed from developing in the side reinforcing rubber 24, even supposing a buckling phenomenon has occurred in the tire side portion 22. Note that in the present exemplary embodiment, the thickness of the side reinforcing rubber 24 at a maximum width position of the carcass 14 is the maximum thickness GA; however, the present invention is not limited to this configuration. The maximum width position of the carcass 14 referred to herein refers to the position with the widest width along the tire width direction of the carcass 14.

A thickness GC of the side reinforcing rubber 24, measured along a normal line to the carcass 14 passing through an end portion 16AE in the tire width direction of the maximum width belt ply 16A, is set with a thickness of 70% or more of the thickness of the side reinforcing rubber 24 at the maximum width position of the carcass 14 (the maximum thickness GA in the present exemplary embodiment).

Moreover, in a state in which the tire 10 is fitted to the standard rim 30 with an internal pressure of the standard air pressure, a height LH from the lower end portion 24A of the side reinforcing rubber 24 to the leading end of the bead portion 12 is set with a height within a range of from 50% to 80% of the height BH of the bead filler 28. It becomes difficult to secure durability during run-flat running if the height LH is more than 80% of the height BH, and there is a deterioration in ride quality if the height LH is less than 50% of the height BH. The height LH is therefore preferably set with a height within a range of from 50% to 80% of the height BH.

A length (width W) of the inclined belt layer 16 (the maximum width belt ply 16A in the present exemplary embodiment) along the tire width direction is set with a length within a range of from 90% to 115% of the tread width D. If the width W of the inclined belt layer 16 along the tire width direction is shorter than 90% of the tread width D, then it becomes difficult to secure the rigidity of the tread portion 20. Moreover, if the width W of the inclined belt layer 16 along the tire width direction is longer than 115% of the tread width D, then ride quality deteriorates. The width W of the belt layer 16 along the tire width direction is accordingly preferably set with a length within a range of from 90% to 115% of the tread width D. Note that the tread width D referred to herein refers to the length in the tire width direction between ground contact ends T of the tread portion 20 under maximum load capacity in a state in which the tire 10 has been fitted to the standard rim 30 with an internal pressure of the standard air pressure.

There is no rim guard (rim protection) provided due to the present exemplary embodiment being applied to a tire 10 having a high section height SH; however, the present invention is not limited to this configuration, and a rim guard may be provided.

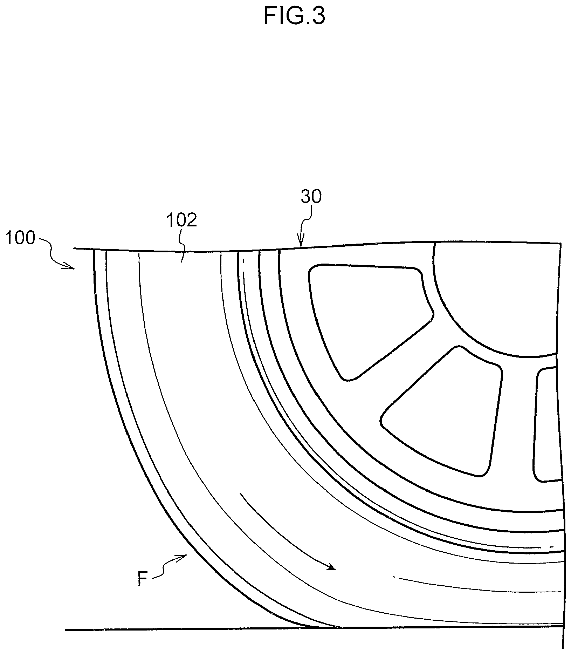

Explanation follows regarding effects of the tire 10 of the present exemplary embodiment, by explaining a buckling phenomenon occurring in a tire side portion at the turn inside of the vehicle. In the below explanation, a tire 100 (see Fig. 3) is a tire of a comparative example, in which the overlap width P does not have a length of 20% or more of the section height SH unlike the tire 10 of the present exemplary embodiment, specifically, in which the overlap width P has a length of less than 20% of the section height SH.

As illustrated in Fig. 3, a ground contact portion of the tire 100 enters a greatly distorted state during run-flat running. When a slip angle (SA) has been applied in this state, for example by cornering, the ground contact portion of the tire 100 is squashed, the distortion of the tire 100 increases, and the belt diameter of a tread-in side portion F increases due to this distortion propagating toward the progression direction front side of the tire 100 (note that the arrow in Fig. 3 indicates the tire rotation direction). As a result, tensile force toward the tire radial direction outer side acting on the bead portions becomes larger, and, together with a buckling phenomenon, in which a tire side portion 102 positioned at the vehicle turn inside bends by folding in toward the inside of the tire 100, sometimes a phenomenon (rim detachment) occurs in which the bead portion detaches from the standard rim 30.

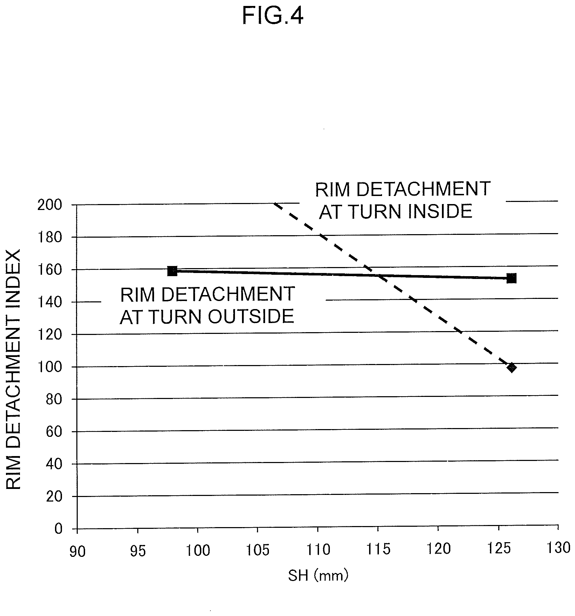

As illustrated in Fig. 4, it has been confirmed that rim detachment at the turn inside is more liable to occur for a tire having a section height SH of 115 mm or more. The graph illustrated in Fig. 4 is from an investigation into a rim detachment index against section height SH when employing run-flat radial tires with a tire width of 225 mm and varied tire cross-section heights SH. The higher the numerical value in the rim detachment index, the less liable rim detachment is to occur. According to Fig. 4, rim detachment is more liable to occur at the turn outside of the tire for tires having a section height SH of less than 115 mm, and rim detachment is more liable to occur at the turn inside of the tire for tires having a section height SH of 115 mm or more. It is apparent from this result that it is important to suppress rim detachment at the turn inside for tires having a section height SH of 115 mm or more.

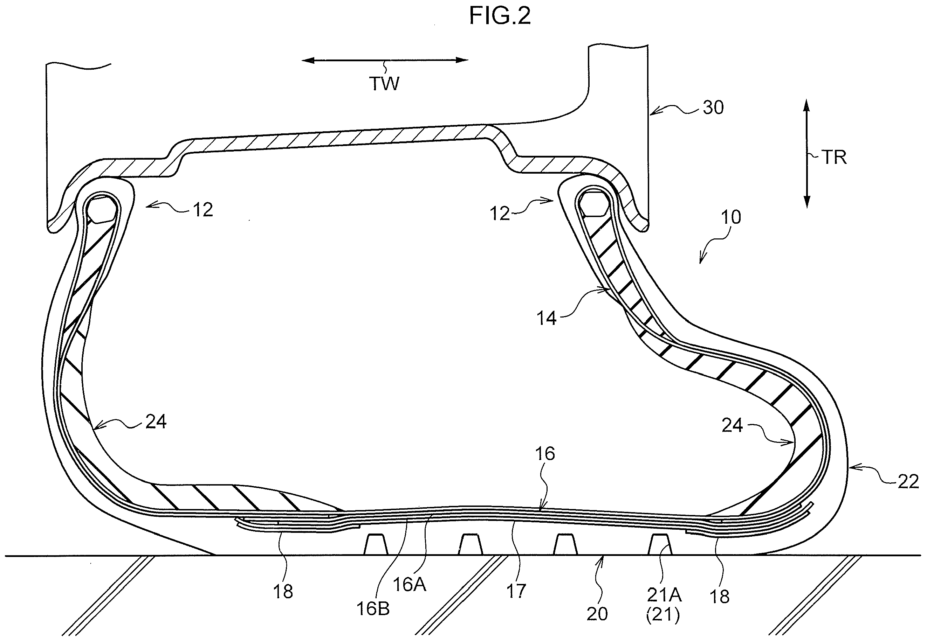

Note that, as illustrated in Fig. 1, in the tire 10 according to the invention, the overlap width P of the respective side reinforcing rubber 24 and the maximum width belt ply 16A along the tire width direction is set to a length of 20% or more of the section height SH. Rigidity is thereby raised in the vicinity of tread end portions, which act as the origin for the buckling phenomenon, and bending of shoulder portions of the tread portion 20 becomes less liable to occur. Thus, as illustrated in Fig. 2, the tire side portion 22 does not bend by folding in toward the inside of the tire 10, even in cases in which a slip angle (SA) has been applied to the tire 10 during run-flat running. This enables the buckling phenomenon to be suppressed from occurring in the respective tire side portion 22 during run-flat running. This accordingly enables rim detachment resistance during run-flat running to be improved.

In the tire 10, the upper end portion 24B of each side reinforcing rubber 24 is positioned further toward the tire width direction outer side than the circumferential direction groove 21A that is furthest toward the tire width direction outer side. In other words, configuration is such that the side reinforcing rubber 24 is not disposed at the tire radial direction inner side of the circumferential direction groove 21A that is furthest toward the tire width direction outer side. Note that it has been confirmed that, in cases in which a slip angle (SA) is applied to the tire 10 during run-flat running, the tread portion 20 bends by folding in the tire width direction with the groove bottom 21AB of the circumferential direction groove 21A, where the thickness of the tread portion 20 is thinner and the rigidity is lower, acting as the origin. Thus, by disposing the upper end portion 24B of each side reinforcing rubber 24 at the tire width direction outer side of the circumferential direction groove 21A that is furthest toward the tire width direction outer side, input of tension accompanying the tread portion 20 bending by folding is suppressed from acting on the side reinforcing rubber 24, even if the tread portion 20 has bent by folding with the groove bottom 21AB of the circumferential direction groove 21A acting as the origin. The durability of the side reinforcing rubber 24 during run-flat running is improved accordingly, thereby enabling the buckling phenomenon to be suppressed from occurring in the tire side portions 22 over a long period.

In particular, in the tire 10 of the present invention in cross-section along the tire width direction, the upper end portion 24B of each side reinforcing rubber 24 is disposed in a position separated from the intersection point between the groove bottom 21AB and the groove wall 21AW of the circumferential direction groove 21A by 3% or more of the tread half width HD along the tire width direction. Thus, input of tension accompanying the tread portion 20 bending by folding is effectively suppressed from acting on the side reinforcing rubber 24, even if the tread portion 20 has bent by folding with the groove bottom 21AB of the circumferential direction groove 21A acting as the origin.

Disposing the upper end portion 24B of each side reinforcing rubber 24 at the tire width direction outer side of the circumferential direction groove 21A that is furthest toward the tire width direction outer side also enables an increase in the weight of the tire 10 to be suppressed.

Setting the overlap width P with a length within a range of from 22% to 27% of the section height SH enables a balance to be made between the above-described advantageous effect of suppressing the buckling phenomenon from occurring, and the above-described advantageous effect of suppressing an increase in weight.

Moreover, due to the lower end portion 24A of each side reinforcing rubber 24 overlapping the bead filler 28, the rigidity of the tire side portion 22 is increased, enabling durability to be improved during run-flat running. Moreover, the end portion 28A of each bead filler 28 is provided further toward the tire radial direction inner side than the maximum width position of the tire 10, and so the rigidity of the tire side portion 22 does not become too high.

Moreover, the thickness GB of the side reinforcing rubber 24 at the center point Q in Fig. 1 is a thickness of 50% or less of the maximum thickness GA of the side reinforcing rubber 24. This thereby shortens the distance from the carcass 14 to the inner face of the side reinforcing rubber 24 at the center point Q, enabling the tensile stress acting on the inner face of the side reinforcing rubber 24 to be lowered. This thereby enables damage to the side reinforcing rubber 24 to be suppressed, even supposing the buckling phenomenon occurs in the tire side portion 22.

As described above, even when the section height SH of the tire 10 is 115 mm or more, the buckling phenomenon can be suppressed from occurring in the tire side portions 22 by setting the overlap width P of the tire 10 of the present invention with a length of 20% or more of the section height SH.

In cases in which the overlap width P is set with a length within a range of from 22% to 27% of the section height SH, an increase in the weight of the tire 10 can be suppressed, while suppressing the buckling phenomenon from occurring in the tire side portions 22.

In the tire 10, the circumferential direction groove 21A is formed within a range of from 50% to 60% of the tread half width HD from the tire equator CL of the tread portion 20. Thus, rigidity is secured at a portion of the tread portion 20 between the circumferential direction groove 21A and the ground contact end T. This enables the tread portion 20 to be suppressed from bending by folding in the tire width direction in cases in which a slip angle (SA) has been applied to the tire 10 during run-flat running.

The thickness GC of the side reinforcing rubber 24 is set with a thickness of 70% or more of the thickness of the side reinforcing rubber 24 at the maximum width position of the carcass 14 (the maximum thickness GA in the present exemplary embodiment). The rigidity is thereby raised in the vicinity of the tread end portions, which act as the origin for the buckling phenomenon, and bending of the shoulder portions of the tread portion 20 is even less liable to occur. This enables the buckling phenomenon to be effectively suppressed from occurring in the tire side portions 22 during run-flat running.

Note that in the present exemplary embodiment, the overlap widths P of the side reinforcing rubber 24 at both tire width direction sides and the maximum width belt ply 16A are respectively set with a length of 20% or more; however, the present invention is not limited to this configuration. For example, a configuration in which the overlap width P of the side reinforcing rubber 24 at the tire mounting direction inside and the maximum width belt ply 16A is set with length of 20% or more is also suitable. Rim detachment is more liable to occur at the tire mounting direction inside due to vertical load on the tire increasing at the turn outside due to a moment arising from centrifugal force when the punctured tire 10 is at the turn outside. Thus, the above measures enable rim detachment to be suppressed.

### Test Examples

In order to confirm the advantageous effects of the run-flat radial tire according to the present invention, run-flat radial tires of Examples 1 to 3, and run-flat radial tires of Comparative Examples 1 and 2 that do not fall within the present invention, were prepared and the following tests were performed.

Explanation first follows regarding the run-flat radial tires of Examples 1 and 2 and the run-flat radial tires of the Comparative Examples 1 to 3 employed in the tests. The size of all of the run-flat radial tires employed in the tests was 225/60R16. The run-flat radial tires of Examples 1 and 2 and the Comparative Examples 1 to 3 are tires that adopt the same structure as the tire 10 of the present exemplary embodiment, but each have different values for the overlap width P and the separation S.

The run-flat radial tire of the Comparative Example 1 is a tire that has an overlap width P of the side reinforcing rubber and the maximum width belt ply along the tire width direction set with a length of 15% of the section height SH. In the Comparative Example 1, the ratio of the separation S to the tread half width HD is set at 18.4%.

The run-flat radial tire of the Comparative Example 2 is a tire that has an overlap width P of the side reinforcing rubber and the maximum width belt ply along the tire width direction set with a length of 27.8% of the section height SH. In the Comparative Example 2, the ratio of the separation S to the tread half width HD is set at 0%, namely, the separation S is set at 0 mm.

The run-flat radial tire of the Comparative Example 3 is a tire that has an overlap width P set with a length of 30% of the section height SH. In the tire of the Comparative Example 3, the ratio of the separation S to the tread half width HD is set at -3%, namely, the side reinforcing rubber is disposed at the tire radial direction inner side of the groove bottom of the circumferential direction groove that is furthest to the tire width direction outer side.

The respective overlap widths P and respective separations S of the run-flat radial tires of Examples 1 and 2 are as shown in Table 1.

In the tests, first, the test tires were fitted to a standard rim as specified by JATMA, mounted to a vehicle without inflating with air (at an internal pressure of 0 kPa), and run-in for a distance of 5 km at a speed of 20 km/h. Then, the test tires were introduced at a specific speed to a curving road having a radius of curvature of 25 m, and stopped at a position of 1/3 of a lap of the curving road, with this repeated twice in succession (a J-turn test). The turning acceleration was then raised and retesting performed in cases in which the bead portions did not detach from the rim.

The turning acceleration when a bead portion of the Comparative Example 1 detached from the rim was taken as a reference value (100), and the turning acceleration when the respective bead portions of Examples 1 and 2 and the Comparative Examples 2 and 3 detached from the rim are shown as an index in the "rim detachment index" column of Table 1. The "rim detachment index" expresses as an index the turning acceleration when a bead portion detached from the rim, with the larger the result the better the result indicated. Moreover, the weight of each of the test tires was measured, and, taking the weight of the Comparative Example 1 as the reference value (100), the weight for each of the tires from Examples 1 and 2 and the Comparative Examples 2 and 3 was expressed as an index in the "weight index" column of Table 1. In the "weight index", smaller values indicate lower weights. Note that the "half width HW of maximum width belt ply" in Table 1 refers to the width of half the width W of the maximum width belt ply (W/2).

**Table 1**

| | Comparative Example 1 | Example 1 | Example 2 | Comparative Example 2 | Comparative Example 3 |
|---|---|---|---|---|---|
| Tread half width HD (mm) | 97.8 | 97.8 | 97.8 | 97.8 | 97.8 |
| Section height SH (mm) | 133.1 | 133.1 | 133.1 | 133.1 | 133.1 |
| Half width HW of maximum width belt ply (mm) | 92 | 92 | 92 | 92 | 92 |
| Overlap width P (mm) | 19 | 26.6 | 30 | 37 | 40 |
| Ratio of overlap width P to tread width (%) | 10 | 13.6 | 15.3 | 19 | 20.4 |
| Ratio of overlap width P to section height SH (%) | 15 | 20 | 22 | 27.8 | 30 |
| Separation S (mm) | 18 | 10.4 | 7 | 0 | -3 |
| Ratio of separation S to tread half width HD (%) | 18.4 | 10.6 | 7.1 | 0 | -3 |
| Rim detachment index | 100 | 125 | 132 | 132 | 133 |
| Weight index | 100 | 102 | 103 | 105 | 106 |

As shown in Table 1, it was confirmed that the larger the overlap width P, the better the result of the rim detachment index. It is conceivable that this is because rigidity in the vicinity of the tread end portions is raised and the tire side portions are less liable to bend due to making the overlap width P larger.

It was also confirmed that there is a smaller fluctuation in the rim detachment index for a ratio of the separation S to the tread half width HD that is under 7.1% and closer to 0%, even when the overlap width P is made larger. It is conceivable that this signifies that disposing the side reinforcing rubber at the tire radial direction inner side of the circumferential direction groove furthest toward the tire width direction outer side makes only a small contribution to rigidity in the vicinity of the tread end portions.

## Claims

1. A run-flat radial tire (10), comprising:
a carcass (14) spanning between a pair of bead portions (12);
an inclined belt layer (16) that is provided at a tire radial direction outer side of the carcass (14), and that is configured by one or more belt plys (16A, 16B) including cord extending in a direction inclined with respect to a tire circumferential direction;
a tread portion (20) that is provided at a tire radial direction outer side of the inclined belt layer (16) and that has a tread face formed with a plurality of circumferential direction grooves (21, 21A) extending along the tire circumferential direction; and
a side reinforcing layer (24) that is provided at a tire side portion (22), the tire side portion (22) coupling the bead portion (12) and the tread portion (20) together, that extends along an inner face of the carcass (14) from a side of the bead portion (12) toward a side of the tread portion (20), that overlaps a belt ply (16A) having a maximum width among the one or more belt plys (16A, 16B), that has an overlap width (P) with the maximum width belt ply (16A) along a tire width direction (TW) having a length of 20% or more of a tire cross-section height (SH), and that has an end portion (24B) at the tread portion (20) side that is disposed further toward a tire width direction outer side than a groove bottom (21AB) of a circumferential direction groove (21A), among the plurality of circumferential direction grooves (21), that is furthest toward the tire width direction outer side,
**characterised in that**:
in a cross-section along the tire width direction (TW), the end portion (24B) at the tread portion (20) side of the side reinforcing layer (24) is disposed at a position separated, along the tire width direction (TW), from an intersection point of the groove bottom (21AB) and a groove wall (21AW) at a tire width direction outer side of the circumferential direction groove (21A) that is furthest toward the tire width direction (TW) outer side, by 3% or more of a tread half width (HD), **in that**:
the tire cross-section height (SH) is 115 mm or more, and **in that**
the overlap width (P) is set to a length within a range from 22% to 27% of the section height (SH).

2. The run-flat radial tire (10) of claim 1, wherein the aspect ratio of the tire is 60%.

3. The run-flat radial tire (10) of any preceding claim, wherein a pair of reinforcement cord layers (18) is provided at the tire radial direction outer side of the belt reinforcement layer (17) so as to respectively cover both end portions of the belt reinforcement layer (17).

## Patentansprüche

1. Notlauf-Radialreifen (10), der Folgendes umfasst:
eine Karkasse (14), die sich zwischen einem Paar von Wulstabschnitten (12) spannt;
eine geneigte Gürtelschicht (16), die auf einer in Reifenradialrichtung äußeren Seite der Karkasse (14) bereitgestellt wird, und durch eine oder mehrere Gürtellagen (16A, 16B), einschließlich einen Kord aufgebaut ist, die sich in einer Richtung erstrecken, die in Bezug auf eine Reifenumfangsrichtung geneigt ist;
einen Laufflächenabschnitt (20), der auf einer in Reifenradialrichtung äußeren Seite der geneigten Gürtelschicht (16) bereitgestellt wird, und der eine Laufflächenseite aufweist, welche von einer Mehrzahl von Umfangsrichtungsrillen (21, 21A), die sich entlang der Reifenumfangsrichtung erstrecken, gebildet wird; und
eine Seitenverstärkungsschicht (24), die an einem Reifenseitenabschnitt (22) bereitgestellt wird, wobei der Reifenseitenabschnitt (22) den Wulstabschnitt (12) und den Laufflächenabschnitt (20) miteinander verbindet, wobei sie sich entlang einer inneren Seite der Karkasse (14), von einer Seite des Wulstabschnitts (12) zu einer Seite des Laufflächenabschnitts (20) hin erstreckt, wobei sie eine Gürtellage (16A), welche eine maximale Breite unter den einen oder mehreren Gürtellagen (16A, 16B) aufweist, überlappt, wobei sie eine Überlappungsbreite (P) mit der Gürtellage (16A) mit maximaler Breite entlang einer Reifenbreitenrichtung (TW) aufweist, die eine Länge von 20% oder mehr einer Reifenquerschnittshöhe (SH) hat, und wobei sie einen Endabschnitt (24B) auf der Seite des Laufflächenabschnitts (20) aufweist, der weiter in einer in Reifenbreitenrichtung äußeren Seite hin angeordnet ist, als ein Rillengrund (21AB) einer Umfangsrichtungsrille (21A), unter der Mehrzahl an Umfangsrichtungsrillen (21), welche am weitesten zu der in Reifenbreitenrichtung äußeren Seite hin angeordnet ist,
**dadurch gekennzeichnet, dass**
in einem Querschnitt entlang der Reifenbreitenrichtung (TW), der Endabschnitt (24B) auf der Seite des Laufflächenabschnitts (20) der Seitenverstärkungsschicht (24) an einer Position angeordnet ist, welche entlang der Reifenbreitenrichtung (TW) getrennt ist, von einem Überschneidungspunkt des Rillengrunds (21AB) und einer Rillenwand (21AW), auf einer in Reifenbreitenrichtung äußeren Seite der Umfangsrichtungsrille (21A), welche am weitesten zu der in Reifenbreitenrichtung (TW) äußeren Seite hin angeordnet ist, um 3% oder mehr einer Laufflächenhalbbreite (HD), dadurch, dass:
die Reifenquerschnittshöhe (SH) 115 mm oder mehr beträgt, und dadurch, dass,
die Überlappungsbreite (P) auf eine Länge innerhalb eines Bereichs von 22% bis 27% der Querschnittshöhe (SH) eingestellt ist.

2. Notlauf-Radialreifen (10) nach Anspruch 1, wobei das Aspektverhältnis des Reifens 60% beträgt.

3. Notlauf-Radialreifen (10) nach einem der vorhergehenden Ansprüche, wobei ein Paar von Verstärkungskordlagen (18) in der in Reifenradialrichtung äußeren Seite der Gürtelverstärkungsschicht (17) bereitgestellt werden, um so jeweils beide Endabschnitte der Gürtelverstärkungsschicht (17) zu überdecken.

## Revendications

1. Pneumatique radial de roulage à plat (10) comprenant:
une carcasse (14) s'étendant entre une paire de parties de talon (12);
une couche de ceinture inclinée (16) qui est pourvue sur un côté extérieur de la carcasse (14) dans la direction radiale du pneumatique et qui est configurée par une ou plusieurs nappes de ceinture (16A, 16B) comportant un câblé s'étendant dans une direction inclinée par rapport à une direction circonférentielle du pneumatique;
une partie de bande de roulement (20) qui est pourvue sur un côté extérieur de la couche de ceinture inclinée (16) dans la direction radiale du pneumatique et qui a une face de bande de roulement formée avec une pluralité de rainures de direction circonférentielle (21, 21A) s'étendant le long de la direction circonférentielle du pneumatique; et
une couche de renforcement latérale (24) qui est pourvue au niveau d'une partie latérale du pneumatique (22), la partie latérale du pneumatique (22) couplant la partie talon (12) et la partie de bande de roulement (20), qui s'étend le long d'une face interne de la carcasse (14) d'un côté de la partie de talon (12) vers un côté de la partie de bande de roulement (20) qui chevauche une nappe de ceinture (16A) ayant une largeur maximale parmi le ou les nappes de ceinture (16A, 16B), qui a une largeur de chevauchement (P) avec la largeur maximale de la nappe de ceinture (16A) le long d'un sens de la largeur du pneumatique (TW) ayant une longueur de 20% ou plus de la hauteur de la section transversale du pneumatique (SH), et qui comporte une partie d'extrémité (24B) du côté de la bande de roulement (20) qui est disposée plus loin vers un côté extérieur du sens de la largeur du pneumatique qu'un fond de rainure (21AB) d'une rainure de direction circonférentielle (21A) parmi la pluralité de rainures de direction circonférentielle (21), qui est la plus éloignée du côté extérieur du sens de la largeur du pneu,
**caractérisé en ce que**:
dans une section transversale le long de la direction de la largeur du pneumatique (TW), la partie d'extrémité (24B) du côté de la partie de bande de roulement (20) de la couche de renforcement latérale (24) est disposée à une position séparée le long de la direction de la largeur du pneumatique (TW), à partir d'un point d'intersection du fond de rainure (21AB) et d'une paroi de rainure (21AW) au niveau d'un côté extérieur du sens de la largeur du pneumatique de la rainure (21A) de direction circonférentielle la plus éloignée vers le côté extérieur du sens de largeur du pneumatique (TW), de 3% ou plus d'une demi-largeur de bande de roulement (HD), dans laquelle:
la hauteur de la section du pneumatique (SH) est de 115 mm ou plus, et
la largeur de recouvrement (P) est définie sur une longueur comprise entre 22% et 27% de la hauteur de la section (SH).

2. Pneumatique radial de roulage à plat (10) selon la revendication 1, dans lequel le rapport d'aspect du pneumatique est de 60%.

3. Pneumatique radial de roulage à plat (10) selon l'une quelconque des revendications précédentes, dans lequel une paire de couches de câblés de renforcement (18) sont pourvues sur le côté extérieur de la couche de renforcement de ceinture (17) dans la direction radiale du pneumatique de manière à recouvrir respectivement les deux parties d'extrémité de la couche de renforcement de ceinture (17).
